# EUROPEAN PATENT SPECIFICATION

(11) **EP 1 566 034 B1**
(45) Date of publication and mention of the grant of the patent: **04.04.2007**
(21) Application number: 03767656.6
(22) Date of filing: 25.11.2003
(51) Int. Cl.: H04L 29/06

(54) **METHOD AND APPLIANCE FOR DISTRIBUTING DATA PACKETS SENT BY A COMPUTER TO A CLUSTER SYSTEM**
VERFAHREN UND GERÄT ZUR VERTEILUNG VON DATENPAKETEN VON EINEM COMPUTER ZU EINEM CLUSTERSYSTEM
PROCEDE ET APPAREIL DE DISTRIBUTION DE PAQUETS DE DONNEES ENVOYES PAR UN ORDINATEUR A UN SYSTEME EN GRAPPE

(30) Priority: 27.11.2002 US 429700 P
(43) Date of publication of application: 24.08.2005
(73) Proprietor: Fujitsu Siemens Computers, Inc., Sunnyvale, CA 94085-5401 (US)
(72) Inventor: KANNAN, Hari, Sunnyvale, CA 94086 (US)
(74) Representative: Epping - Hermann - Fischer
(86) International application number: PCT/EP2003/013255
(87) International publication number: WO 2004/049669

(56) References cited:
- EP-A- 1 117 224
- US-A1- 2001 052 024
- US-A1- 2002 161 839

## Description

The invention refers to a method for distributing a data packet sent by a computer via a connection line to a cluster system, comprising of at least two nodes, wherein at least two first nodes comprise a service for processing said data packet.

An example for such data packet is the user datagram protocol. The user datagram protocol (UDP) does not have a notion of connection. It is also called a connectionless protocol, because an acknowledgement after UDP packets are received is not required. Two computers connected together over a network using the UDP protocol will send data packets to each other without waiting for an acknowledgement. Packets, which do not reach their destination, are lost. Since the UDP packet only includes a small header without complex error correction it is normally used in applications, where high data rates are required.

Especially in scalable internet services (SIS) data connections with the UDP protocol are often used. If a computer sends a UDP packet to a cluster system providing some scalable internet services like WWW, FTP or similar, the cluster system software has to make sure that no UDP packet is lost within the cluster. This is even more important, because some applications using the UDP protocol required knowledge about previously sent packets.

Document EP 1 117 224 A1 shows a method for distributing a data packet sent by a computer to a clustered computer system. The data packet is sent to an interface node and then forwarded to one of the service nodes for further processing.

A list is provided, including identification of the computer that is source of previous data packets and the corresponding processing node that was assigned for those data packets. Document US 2001/005024 A1 shows a router and a method for routing and load balancing in a cluster of server nodes. Client request can be handled by each node. However, clients might have an affinity to specific server nodes that are preferred to handle the request. The affinity is defined by a table list in a TCP router.

A problem can occur, if packets sent to the cluster system are received by different interface nodes of the cluster. In such cases packets can be lost and connection or services must be restarted.

The task of the invention is to provide a method capable of preventing the loss of UDP packets sent to a cluster system.

The task is solved by the independent claim.

The invention provides a method for distributing a data packet sent by a computer via connection line to a cluster system. The cluster system comprises of at least two nodes, wherein at least two first nodes comprise a service for processing said data packet and wherein at least two second nodes comprises means for receiving said data packet. The data packet comprises a UDP packet and an identification of the computer the data packet was sent from. The identification can be part of the header of the data packet. The method comprises the steps of:
a) Receiving the data packet by one of the at least two second nodes;
b) Extracting said identification within said data packet;
c) Checking whether a data packet comprising the same identification has been received and forwarded to one of the at least two first nodes;
d) Forwarding the data packet to one of the at least two first nodes if the previous check is positive;
e) Selecting a node of the at least two first nodes and forwarding the data packet to said selected node if the previous check is negative;
f) creating a first list, said first list comprising entries, said entries comprising said identification of the computer the data packet was sent from and a node identification of the one of the at least two first nodes the data packet was sent to assigned to said identification;
g) creating a second list, said second list comprising entries, said entries comprising the identification of said data packets received by each of the at least two second nodes and further comprising a node identification of the one of the at least two first nodes assigned to said identification.

By this method the data packet received by the at least one second node is always forwarded to that node, which previously already received a data packet from the same computer. Thus data packets belonging to the same connection are always forwarded to the correct node. The expression connection is defines as data packets having an identification of a specific computer the data packet was sent from. Packets sent by the same computer are therefore considered to belong to the same connection. If a check whether a data packet sent by a specific computer has been previously received is negative then a new node is selected. This method step will result in a new connection. Data packets sent again by the same specific computer will then be automatically forwarded to the selected node. Due to different selection algorithm a load balancing of incoming UDP packets can be established.

The invention also provides an appliance for distributing data packets sent by a computer to a cluster system. Said data packets comprising a UDP packet and also an identification of the computer the data packet was sent from. The cluster system comprises at least two nodes connected via a clus ter network. According to the invention the appliance comprises means for processing said data packet in at least two first nodes of the at least two nodes and also comprises means for receiving data packets on an at least two second nodes of said at least two nodes. Furthermore, according to the invention the appliance comprises means for forwarding received data packets to said at least two first nodes and means for selecting a node of said at least two first nodes the data packets have to be forwarded to.

In an embodiment of the invention the means for forwarding and the means for processing the data packet are implemented on different nodes of the at least two nodes. Alternatively the means for forwarding and the means for selecting are implemented on different nodes of the at least two nodes. This allows a better load balancing and gives higher security against hardware failures on one node.

In another embodiment of the invention the data packet to be forwarded is the UDP packet within the data packet received by the at least two second nodes. In this embodiment of the invention the UDP packet will be extracted from the received data packet by one of the at least two second nodes and then forwarded to one of the at least two first nodes.

In a further embodiment of the invention step c) of the inventive method comprises the step of:
- Checking, whether a received data packet includes an identification of a computer, of which another data packet was received a specific time ago.

In this embodiment of the invention, a data packet received by one of the at least two second nodes is considered to belong to a specific connection, if another data packet coming from the same computer was received by the same computer only a predefined. In other words, if there is only a predefined gap between two subsequent packets having the same identification, therefore coming from the same computer, the two subsequent packets will be considered to belong to the same connection. Packets belonging to same connection are forwarded to the same node, whenever possible. If the gap is greater than the predefined time value, then the received data packet is considered to belong to a new connection and might be forwarded to a different node.

In another embodiment of the invention the at least one second node comprises a first list, wherein the first list comprises entries. The entries comprise the identification of the computer the data packet was sent from as well as a node identification of the node the data packet is forwarded to. Said node identification is assigned to the identification of the computer the data packet was sent from. If a further data packet is received by the at least one second node, the at least one second node will perform the checking by looking for the identification in the first list. If an identical identification is found, it is considered to belong to the same connection and the node identification assigned to it is used to forward the data packet. If the identification is not found in the first list, then the received data packet is considered to belong to a new connection, a new node will be selected and the data packet will be forwarded to the new selected node.

In a further embodiment of the invention a second list is created, wherein the second list comprises the identification of data packets received by each of the at least one second nodes and further also comprises a node identification assigned to the identification of said data packets. The embodiment is especially useful, if there are more than just one second node receiving data packets from computers. The second list comprises the identification of the computers the data packets were sent from and also the node identification the packets were forwarded to regardless of the receiving second node. This will allow to identify existing connections even if data packets belonging to the same connection are received by different second nodes.

In another embodiment of this invention the entries in the first or in the second list comprising the identification of the computers the packets were sent from will be deleted, if no additional data packet having the same identification is received within a specific time. After deletion the data packet is considered to belong to a new connection.

In a further embodiment the selection in step e) of the method according to the invention comprises the steps of:
- measuring the system load of each of the at least one first node and selecting the node with the least system load. Alternately the selection in step e) comprises the step of:
- selecting a node of the at least one first node with the lowest count of connections.
Further alternately the selection in step e) comprises the step of:
- selecting a node of the at least one first node according to a cyclical pattern.
The selection of nodes for new connections is very useful for load balancing.

Other features and advantages of the present invention will be apparent from the dependent claims. The present invention explained in detail below is illustrated by way of example and not limited to the examples and the accompanying figures enclosed herein, in which:
- Figure 1: shows an embodiment of the invention in a cluster system;
- Figure 2: shows the physical structure of a cluster system implementing the invention;
- Figure 3: shows a different embodiment of the invention;
- Figure 4: shows an example of lists used for gateway and data-base nodes in an embodiment of the invention;
- Figure 5: shows a list used in service nodes in an embodiment of the invention;
- Figure 6: shows an example of the inventive method;
- Figure 7: shows a second example of the inventive method;
- Figure 8: shows an useful add-on to the inventive method
- Figure 9: shows another useful add-on to the inventive method.

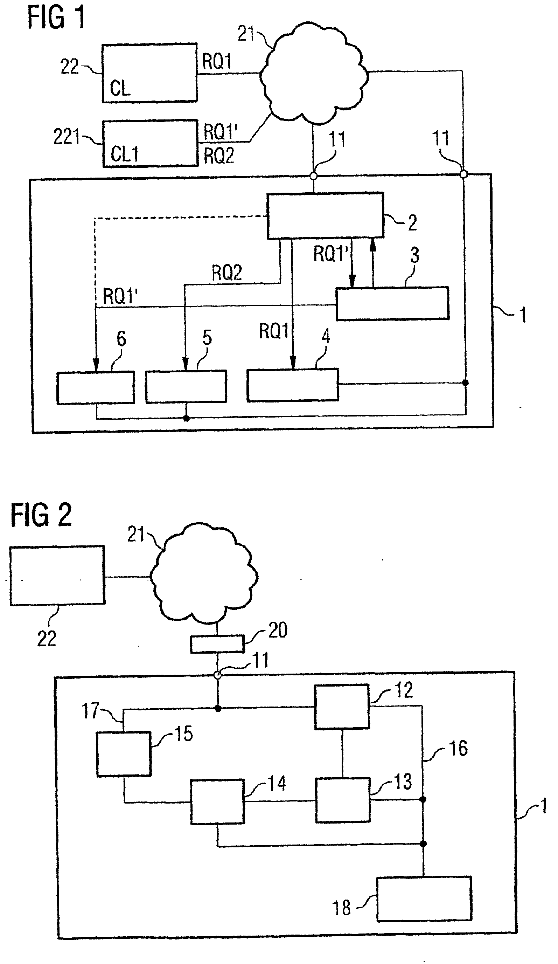

Figure 2 shows the structure of a cluster system, in which the invention is implemented. The cluster 1 comprises four nodes 12, 13, 14, 15 which are connected over a network 17. Each node is an independent computer comprising at least a memory and a processor unit. An operating system as well as a cluster software is running on each of those nodes. Communication between the nodes is possible via a specific cluster software and the network 17. The cluster 1 also comprises a second communication network 16, which is connected to the nodes 12, 13, 14. The second network 16 connects the nodes to a shared storage device, where data is stored. The storage device 18 can include, for example, a RAID-system comprising a database or a plurality of hard disks. It can also include its own processor unit.

In this embodiment of the invention the cluster system is connected to the internet 21 via a firewall 20. The firewall can be a software module on a specific computer or a router or a hardware firewall. It can include packet filtering , IP-masquerading, Spoofing and similar techniques. The firewall is connected to the cluster network 17. All incoming internet connections are received by the firewall 20, filtered and then sent to the cluster input 11.

The cluster 1 can communicate with a client 22, which is part of the internet 21, via the communication input 11 and the firewall 20. For example, the client 22 can request a worldwide web page from the cluster 1. The request is received by the firewall 20 forwarded to the cluster 1 and then processed by one of the nodes within the cluster.

The physical structure of the cluster 1 in Figure 2 can be replaced by a logical structure of a cluster 1 as seen in the appliance of figure 1. Cluster 1 in figure 1 now also comprises different services. The services can be executed on different nodes, but two or more services can also be executed by one node. It is also possible to spread one service over different nodes. Administration and arrangement of the services on the available nodes is done by the cluster software or the scalable internet services software respectively.

In this example of the invention cluster 1 comprises a gateway service 2. The gateway service 2, is implemented in a specific node, which receives all incoming requests from an external client 22 or 221 respectively. The cluster 1 also comprises different service modules 4, 5 and 6 which are used for processing different requests. The service modules 4, 5 and 6 are also implemented on different physical nodes. For example, the service module 4 and 6 are the same service modules processing the same requests. However the are executed on different nodes. The module 5 is executed on a third node and processes different request. All service modules are implemented in a way to process incoming UDP-requests.

Furthermore, the client comprises a database module 3. This database module 3 is used for administrative work, for example load balancing, scheduling service modules on different nodes and other administrative work. The database module is executed on another node for security reasons in order to improve stability of the whole appliance. The connection and the data packets sent between all modules are established via the connection network between the nodes in the cluster system.

In this embodiment of the invention the gateway module 2 receives a UDP packet RQ1 coming from, for example, the client 22 via the internet 21. The UDP packet RQ1 includes the source address of the client 22 as well as the destination address, in this case the destination address of cluster 1. The source address is defined by an IP address of the client 22 in addition with a port address. Both features together resemble a unique identification used by the appliance to identify the connection. The destination address is given by the IP address of cluster 1 as well as a cluster port address.

The gateway module 2 now checks whether a UDP packet having the same source address has been received before. In other word it looks for the same IP-address and port number received in a previously packet. If that is the case it is assumed, that the UDP packet belongs to the same connection. It will be forwarded to a service module on a node, which has also received the previous packet.

For example, the UDP packet RQ1 of client 22 has been forwarded by the gateway module 2 to the service module 4 on node 4. A second UDP packet sent by the client 22 received by the gateway module includes the same IP address of client 22. If it includes also the same port number it will be forwarded by the gateway module 2 to the service module 4 on node 4 as well.

An additional but new UDP packet RQ1' is now sent by the client 221 and received by the gateway module 2. Since the gateway module 2 has not received any UDP packets from that client before the gateway module 2 considers the received packet to belong to a new connection. Therefore the packet RQ1' is forwarded to the database module 3.

The database module 3 will make the decision to which node the packet has to be forwarded for processing. The decision is performed by a scheduling algorithm implemented in the database module 3. The scheduling algorithm used here is quite simple. The database module simply chooses according to a cyclical pattern the next node, on which the service capable of processing the received UDP packet is executed.

However there are more possibilities for the scheduling algorithm. One possibility for the database module is to look for the IP address of the client 221 and forward the packet to a service module on a node, which has received a packet from the same IP address as before. This is called client-based scheduling algorithm. Another possibility is to look for the system load and to choose the node with the least system load. Yet another possibility is to count the already existing connections of a node and choose the node with the least connections. Yet another possibility is called spill over, wherein a replacement node is chosen as soon as the system load on the original node exceeds a predefined value. It is possible to combine the scheduling method disclosed herein or to find other scheduling algorithms. By using a specific algorithm or switching between different methods load balancing is implemented.

If the node chosen by the database is available the UDP packet is forwarded to that node. If not a fallback node is checked for availability. Furthermore, the database module 3 will send the node's identification to the gateway module 2, thereby telling the gateway module 2 to forward additional UDP packets from the same connection to the selected node.

In this embodiment of the invention the UDP packet RQ1 from the client 22 is forwarded to the service module 4 on service node 4, while the first UDP packet RQ1' from client 221 is forwarded by the gateway module 2 first to the database module 3 and then forwarded to the service module 6 on node 6. All further UDP packets from client 221 will be forwarded by the gateway module 2 automatically to the service module 6 on node 6.

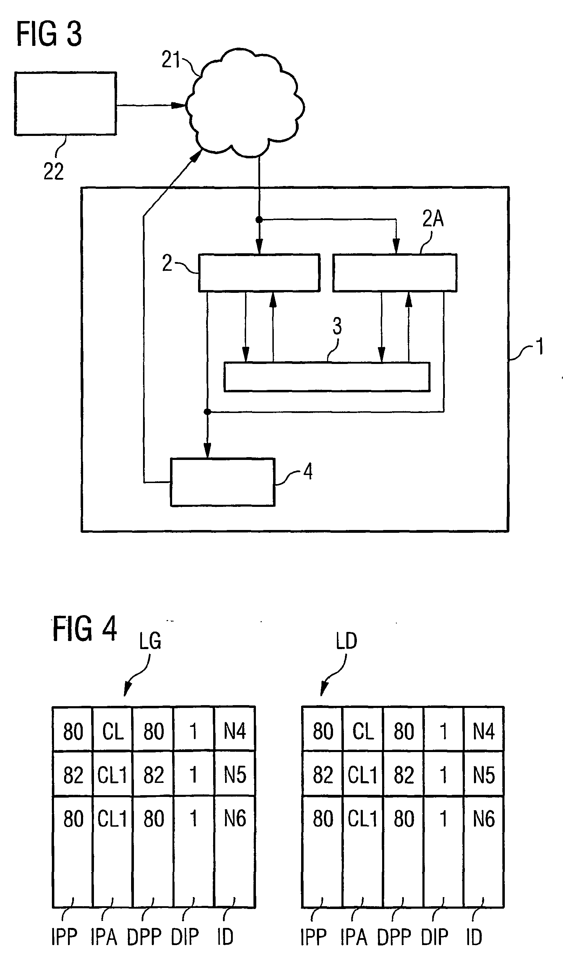

Administration of the different connections is implemented in the gateway module 2 as well as in the database module 3 by lists including the destination address and the source address. Those lists are shown in Figure 4.

The left list LG is used for the gateway module 2. The list LG comprises five columns with three rows entries. The first column IPP includes the port number of the source address. In the second column IPA the IP address of the source where the UDP packets were sent from are stored. In the next two columns DPP, DIP the port number as well as the IP address of the cluster which received the incoming UDP packets are stored. The last column ID includes the address of the node, the UDP packet is forwarded to.

In the example the list LG of the gateway module 2 as well as the list LD of the database module 3 comprises three entries. Two entries are having the port number 80 and. One of those entries has the IP-address CL of client 22, whiles the other entry includes the IP-address CL1 of client 221. One entry states, that a UDP packet with port number 82 and IP-address CL1 of client 221 was received by the gateway module 2 and forwarded to the service node N5.

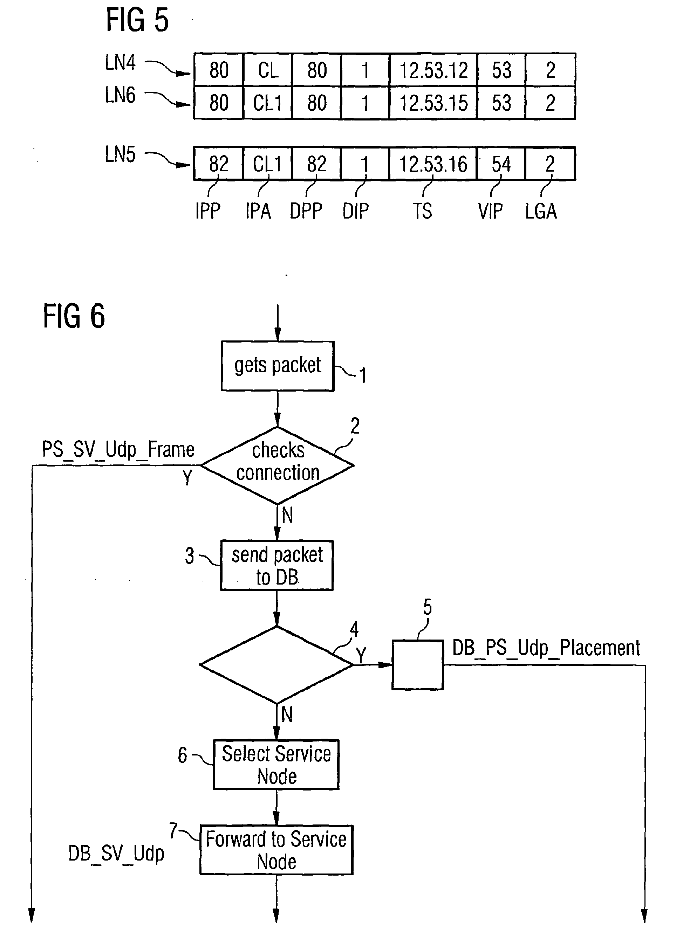

Figure 5 shows the list entries of the service module 4, 5 and 6. The lists LN4, LN5, LN6 also comprises the source port number IPP, the source IP address IPA as well as the destination port number DPP and the destination IP address DIP. Furthermore it comprises a time stamp TS. The time stamp is a time value, on which the last UDP packet has been received by the node. In the example the list LN4 of node N4 has the oldest time stamp followed by list LN6 of node N6 and then by node N5. The time stamp will be updated if a further packet is received by the service module. Furthermore each list comprises a virtual IP address for internal communication as well as a list of gateways LGA the packets could have come from.

All lists are updated on a regular basis. If packets considered as new connections are received, the database and the gateway modules will add new entries with the corresponding identifications. Considering the time stamp the service modules will decide when a connection has to be closed or can be considered inactive. They can do that by comparing the time stamp with the actual time. If the result is bigger than a predefined value, they will delete the corresponding entries and send messages to the database and/or gateway module. Those modules will also delete the corresponding entries.

Figure 3 shows another embodiment of the invention. In this embodiment the cluster 1 comprises two gateway modules 2 and 2A implemented on two different nodes. A new UDP packet is received by the gateway 2 from the internet 21 and the client 22. Since no previously UDP packet has been received by the client 22, the gateway 2 sends in this example only the IP address as well as the port number of client 22 included in the received UDP package to the database module 3. The database module 3 chooses a new service module, in this case module 4, and sends the node identification, where service module 4 is executed back to the gateway module 2. The gateway module 2 forwards the UDP packet to service module 4 for data processing.

In a later stage an additional UDP packet is sent by the client 22 to the cluster 1. However, it is now received by the gateway 2A due to a failure of gateway 2. Since no UDP packet from client 22 has been received by gateway 2A before, gateway 2A considers the UDP packet as a new connection. It forwards the address to the database module 3. However, database module 3 already has an entry of client 22 and the corresponding port number. It will therefore not choose a service module but reply to the gateway 2A with the node identification of the node, on which service module 4 is running. The gateway 2A will then forward the UDP packet to service module 4 or to that node respectively. In a cluster system this allows to establish different gateways without having the problem, that UDP packets coming from the same client are forwarded to different nodes for processing.

An embodiment of the inventive method shows Figure 6. In step 1 the gateway module receives a UDP packet and extracts the source IP address as well as the source port number. In step 2 it checks whether a connection given by a previously received packet exists. It does that by looking for an entry in its list. If a packet form the same source has already received, the UDP packet is forwarded directly to the service module on a node for processing by PS_SV_Udp_Frame.

If that is not the case the gateway module will send in step 3 the UDP packet to the database module or database node. The connection check in step 2 done by the gateway module or gateway node will fail, if the received packet belongs to a new connection or the packet arrived on a new gateway. Another possibility for failure will be if the gateway was changed by the user side or the original gateway had a failure and a new gateway was selected. Furthermore, it could also be possible that the gateway module has already forwarded a previous packet to the database module for scheduling, but has not yet received a response from the database module.

In step 4 the database will check whether an entry for a connection exists. If the result is positive it will update the gateway module by sending a message DB_PS_Udp_Placement including the node's identification additional UDP packets from the same connection have to be forwarded to and then forward the UDP packet to the selected service node. This is done in step 5.

If the database module does not find an entry for a connection it will then select in step 6, according to the scheduling algorithm, a new service node for the connection. The node's identification of the selected node is then forwarded to the gateway module in order to make the necessary connection entries. For successive frames of this connection an new check will be positive. Additionally the database module will forward the UDP packet to the service node in step 7 by DB_SV_UdpFrame indicating the first packet of a new connection.

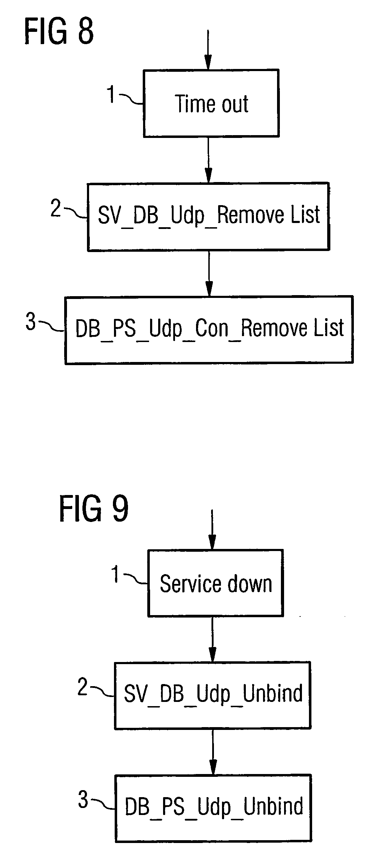

In Figure 8 an extension of the inventive method handling old connections is shown. The service module in a service node processing UDP packets needs a possibility to decide, whether a connection is obsolete or still active. For this purpose the time stamp TS in the service nodes lists in figure 5 are used. After a predefined connection time expires and no additional UDP packets belonging to the connection are received the service module cleans up the list by deleting entries considered inactive in step 1. Additionally the service node forwards a list of connections that had been inactive for the predefined time to be cleaned up by the database module as seen in step 2 of figure 8. This is done by sending the message SV_DB_Udp_Con_Remove_List together with the list. The database list is updated and the list is forwarded using DB_SV_Udp_Con_Remove_List to the gateway module by the database module in step 3. The gateway module will the delete the corresponding entries. Incoming UDP packets comprising the same IP address and port number are now considered to be new connections.

Furthermore Figure 9 shows an implementation handling failure of a service on a service node. If a service module on a service node fails, for example if the service node crashes, a message is sent from the service node to the database module in order to clean up all entries in the database module that correspond to that service. This is done in step 2 by sending SV_DB_Udp_Unbind. Upon receiving such message the database module will remove the node identification from the list of possible nodes capable of processing the UDP packets. After cleaning up all entries in the database module lists the database module will forward all necessary information to the gateway module in step 3 using DB_PS_Udp_Unbind. The gateway module will delete all connection entries with that node entry

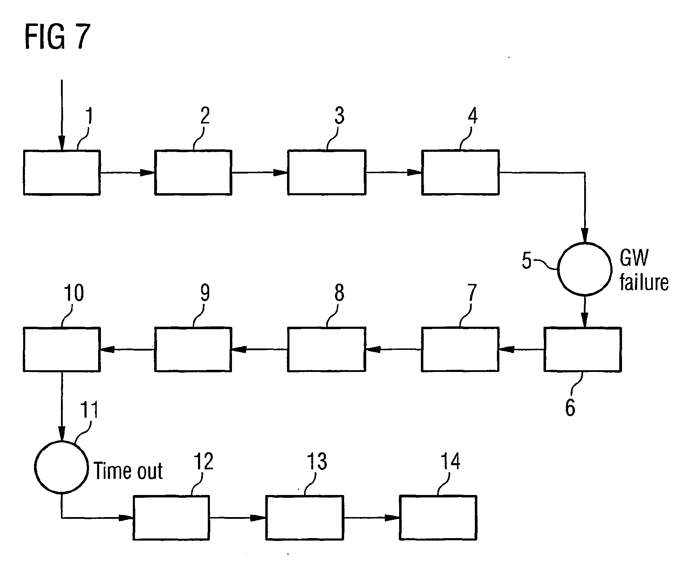

In Figure 7 an example for such method can be seen. In step 1 a new UDP packet is received by the gateway module and considered as a new connection, since the gateway module does not have any entry associated with the identification in the UDP packet. Therefore it forwards the UDP packet to the database module in step 2, wherein the database module selects a node according to the scheduling algorithm for processing the UDP packet. The UDP packet is forwarded to the selected node by the database module and the database module also updates the gateway module by sending the node's identification.

Other UDP packets from the same source received by the gateway module are forwarded to the service node automatically in step 4. In step 5 the gateway node fails. A new gateway is automatically selected in step 6 by the underlying cluster software. The new selected gateway now receives a UDP packet from the same connection as in step 4. However the new selected gateway does not have an entry for that connection. Hence it forwards the UDP packet to the database module in step 8. The database module also checks its connections and finds an entry with the same IP entry and the same port number. It will then simply return the appropriate service node's identification to the new selected gateway module in step 9 and forward the UDP packet to that node in step 10.

The service node now does not receive any UDP packets from that specific IP address and port number for some time and therefore considers the connection inactive in step 11 due to time out. It will delete the corresponding entry and forward the entry to be deleted to the database module in step 12. The database module will clean up all entries corresponding to that connection and forward the same list to the gateway module in step 13. After cleaning up all existing connections the service node is able to unbind from the cluster by telling the database module not to use this node for future scheduling.

Due to the redundant information in the database module it will possible to route incoming connections to the same service node for processing, even if a gateway node fails. It is useful to implement a backup database. The backup database also collects the connection information from all service nodes which allows a smooth fail-over in case of a failure of the database module. When a service node fails all existing connections to the failed node would also fail. Future packets for that specific node would be routed as though they were new connections. The database module will clean up its table for the connection entries that correspond to the service node if the service node fails. The timeout value after incoming UDP packets are assumed to belong to a new connection can be specified on a service basis as well as on a node or on a cluster-wide basis. This method and appliance which can be implemented in a cluster software or in a scalable internet service allows to distribute and to reroute UDP packets with high availability.

### Reference List:

- 1:: Cluster System
- 2:: Gateway Module
- 3:: Database Module
- 4,5,6:: Service Module
- 12, 13, 14, 15:: Nodes
- 16, 17:: Networks
- 11:: Connection
- 20:: Firewall
- 21:: Internet
- 22, 221:: Clients
- RQ1, RQ2, RQ1':: UDP packets
- IDP, IDA:: Source Address
- DPP, DIP:: Destination Address
- ID:: Node's Identification
- LG:: Gateway List
- LD:: Database List
- LN4, LN5, LN6:: Node List
- TS:: Time Stamp
- VIP:: Virtual IP Address
- LGA:: Gateway Lists

## Claims

1. Method for distributing a data packet sent by a computer (22) via a connection line to a cluster system, comprising of at least two nodes (2, 3, 4, 5, 6), wherein at least two first nodes (4, 5, 6) comprise a service for processing said data packet,
**characterized in that**
at least two second nodes (2, 2A) comprise means for receiving said data packet, said data packet comprising an UDP-packet and an identification of the computer (22) the data packet was sent from, the method comprising the steps of:
a) receiving the data packet by one of the at least two second nodes (2, 2A);
b) retrieving said identification within said data packet;
c) checking, whether a data packet comprising the same identification has been received and forwarded to one of the at least two first nodes (4, 5, 6);
d) forwarding the data packet to the one of the at least two first nodes (4, 5, 6) if the previous check is positive;
e) selecting a node of the at least two first nodes (4, 5, 6) and forwarding the data packet to said selected node if the previous check is negative.
f) creating a first list (LG), said first list comprising entries (IPA, ID), said entries comprising said identification of the computer the data packet was sent from and a node identification of the one of the at least two first nodes (4, 5,6) the data packet was sent to assigned to said identification;
g) creating a second list (LD), said second list comprising entries, said entries comprising the identification of said data packets received by each of the at least two second nodes (2, 2A) and further comprising a node identification of the one of the at least two first nodes assigned to said identification.

2. Method of claim 1,
wherein the data packet to be forwarded is the UDP-packet within the data packet received by one of the at least two second nodes (2, 2A).

3. Method of one of the claims 1 to 2,
wherein step c) comprises the step of:
- checking, whether a data packet comprising the same identification has been previously received and forwarded to the one of the at least two first nodes (4, 5, 6) before a defined timeframe.

4. Method of one of the claims 1 to 3,
wherein the first list is used in step d) to identify the node the data packet has to be forwarded.

5. Method of one of the claims 1 to 4,
wherein entries comprising the identification will be deleted from the first and/or second list, if no data packet with said identification is received within a specific time frame.

6. Method of one of the claims 1 to 5,
wherein the selection in step e) comprises the step of:
- measuring the system load of each of the at least two first nodes (4, 5, 6) and select the node with the least system load;
or
- select a node of the at least two first nodes (4, 5, 6) with the lowest count of connections.

7. Method of one of the claims 1 to 6,
wherein the identification of the computer comprises the IP-address of the computer and a port address.

## Patentansprüche

1. Verfahren zum Verteilen eines durch einen Computer (22) über eine Verbindungsleitung gesendeten Datenpakets zu einem Clustersystem, das mindestens zwei Knoten (2, 3, 4, 5, 6) umfasst, wobei mindestens zwei erste Knoten (4, 5, 6) einen Dienst zur Verarbeitung des Datenpakets umfassen,
**dadurch gekennzeichnet, daß**
mindestens zwei zweite Knoten (2, 2A) Mittel zum Empfangen des Datenpakets umfassen, wobei das Datenpaket ein UDP-Paket und eine Identifikation des Computers (22), von dem das Datenpaket gesendet wurde, umfaßt, wobei das Verfahren die folgenden Schritte umfaßt:
a) Empfangen des Datenpakets durch einen der mindestens zwei zweiten Knoten (2, 2A);
b) Abrufen der Identifikation in dem Datenpaket;
c) Prüfen, ob ein Datenpaket, das dieselbe Identifikation umfaßt, empfangen und zu einem der mindestens zwei ersten Knoten (4, 5, 6) weitergeleitet wurde;
d) Weiterleiten des Datenpakets zu dem einen der mindestens zwei ersten Knoten (4, 5, 6), wenn die vorherige Prüfung positiv ist;
e) Auswählen eines Knotens der mindestens zwei ersten Knoten (4, 5, 6) und Weiterleiten des Datenpakets zu dem ausgewählten Knoten, wenn die vorherige Prüfung negativ ist,
f) Erzeugen einer ersten Liste (LG), wobei die erste Liste Einträge (IPA, ID) umfaßt, wobei die Einträge die Identifikation des Computers, von dem das Datenpaket gesendet wurde, und eine Knotenidentifikation des einen der mindestens zwei ersten Knoten (4, 5, 6) umfassen, zu dem das Datenpaket gesendet wurde, der der Identifikation zugewiesen ist;
g) Erzeugen einer zweiten Liste (LD), wobei die zweite Liste Einträge umfaßt, wobei die Einträge die Identifikation der von jedem der mindestens zwei zweiten Knoten (2, 2A) empfangenen Datenpakete umfassen und ferner eine Knotenidentifikation des einen der mindestens zwei ersten Knoten umfassen, der der Identifikation zugewiesen ist.

2. Verfahren nach Anspruch 1, wobei das weiterzuleitende Datenpaket das UDP-Paket in dem Datenpaket ist, das durch einen der mindestens zwei zweiten Knoten (2, 2A) empfangen wird.

3. Verfahren nach einem der Ansprüche 1 bis 2, wobei Schritt c) den folgenden Schritt umfaßt:
- Prüfen, ob ein Datenpaket, das dieselbe Identifikation umfaßt, vor einem definierten Zeitrahmen zuvor empfangen und zu dem einen der mindestens zwei ersten Knoten (4, 5, 6) weitergeleitet wurde.

4. Verfahren nach einem der Ansprüche 1 bis 3, wobei die erste Liste im Schritt d) zum Identifizieren des Knotens verwendet wird, zu dem das Datenpaket weiterzuleiten ist.

5. Verfahren nach einem der Ansprüche 1 bis 4, wobei Einträge, die die Identifikation umfassen, aus der ersten und/oder der zweiten Liste gelöscht werden, wenn innerhalb eines spezifischen Zeitrahmens kein Datenpaket mit der Identifikation empfangen wird.

6. Verfahren nach einem der Ansprüche 1 bis 5, wobei die Auswahl im Schritt e) die folgenden Schritte umfaßt:
- Messen der Systemlast jedes der mindestens zwei ersten Knoten (4, 5, 6) und Auswählen des Knotens mit der geringsten Systemlast; oder
- Auswählen eines Knotens der mindestens zwei ersten Knoten (4, 5, 6) mit der niedrigsten Anzahl von Verbindungen.

7. Verfahren nach einem der Ansprüche 1 bis 6, wobei die Identifikation des Computers die IP-Adresse des Computers und eine Portadresse umfaßt.

## Revendications

1. Procédé de distribution d'un paquet de données envoyé par un ordinateur (22) via une ligne de connexion à un système en grappe, comprenant au moins deux noeuds (2, 3, 4, 5 , 6), dans lequel au moins deux premiers noeuds (4, 5, 6) comprennent un service pour traiter ledit paquet de données,
**caractérisé en ce que**
au moins deux deuxièmes noeuds (2, 2A) comprennent des moyens pour recevoir ledit paquet de données, ledit paquet de données comprenant un paquet UDP et une identification de l'ordinateur (22) duquel le paquet de données avait été envoyé, le procédé comprenant les étapes suivantes :
a) réception du paquet de données par un desdits au moins deux deuxièmes noeuds (2, 2A);
b) récupération de ladite identification dans ledit paquet de données;
c) vérification de ce qu'un paquet de données comprenant la même identification a été ou non reçu et transféré à un desdits au moins deux premiers noeuds (4, 5, 6);
d) transfert du paquet de données audit un desdits au moins deux premiers noeuds (4, 5, 6) si la vérification précédente est positive;
e) sélection d'un noeud desdits au moins deux premiers noeuds (4, 5, 6) et transfert du paquet de données audit noeud sélectionné si la vérification précédente est négative;
f) création d'une première liste (LG), ladite première liste comprenant des entrées (IPA, ID), lesdites entrées comprenant ladite identification de l'ordinateur duquel le paquet de données avait été envoyé et une identification de noeud dudit un desdits au moins deux premiers noeuds (4, 5, 6) auquel le paquet de données avait été envoyé, assignées à ladite identification;
g) création d'une deuxième liste (LD), ladite deuxième liste comprenant des entrées, lesdites entrées comprenant l'identification desdits paquets de données reçus par chacun desdits au moins deux deuxièmes noeuds (2, 2A) et comprenant en outre une identification de noeud dudit un desdits au moins deux premiers noeuds, assignées à ladite identification.

2. Procédé selon la revendication 1, dans lequel le paquet de données à transférer est le paquet UDP dans le paquet de données reçu par un desdits au moins deux deuxièmes noeuds (2, 2A).

3. Procédé selon l'une quelconque des revendications 1 à 2, dans lequel l'étape c) comprend l'étape suivante :
- vérification de ce qu'un paquet de données comprenant la même identification a été ou non précédemment reçu et transféré audit un desdits au moins deux premiers noeuds (4, 5, 6) avant une période de temps définie.

4. Procédé selon l'une quelconque des revendications 1 à 3, dans lequel la première liste est utilisée à l'étape d) pour identifier le noeud auquel le paquet de données doit être transféré.

5. Procédé selon l'une quelconque des revendications 1 à 4, dans lequel des entrées comprenant l'identification seront effacées de la première et/ou deuxième liste si aucun paquet de données avec ladite identification n'est reçu dans une période de temps spécifique.

6. Procédé selon l'une quelconque des revendications 1 à 5, dans lequel la sélection à l'étape e) comprend l'étape suivante :
- mesure de la charge système de chacun desdits au moins deux premiers noeuds (4, 5, 6) et sélection du noeud ayant la charge système la plus faible;
ou
- sélection d'un noeud desdits au moins deux premiers noeuds (4, 5, 6) avec le nombre le plus bas de connexions.

7. Procédé selon l'une quelconque des revendications 1 à 6, dans lequel l'identification de l'ordinateur comprend l'adresse IP de l'ordinateur et une adresse de port.
